(19) Europäisches Patentamt / European Patent Office / Office européen des brevets

(11) **EP 2 124 310 B1**

(12) **FASCICULE DE BREVET EUROPEEN**

(45) Date de publication et mention
de la délivrance du brevet:
**13.09.2017  Bulletin 2017/37**

(51) Int Cl.:
***H02H 9/02*** *(2006.01)*      ***H02H 9/04*** *(2006.01)*

(21) Numéro de dépôt: **09160299.5**

(22) Date de dépôt: **14.05.2009**

(54) **Dispositif de protection d'un circuit électrique contre les surtensions**

Überspannungsschutzvorrichtung für eine elektrische Schaltungsanordnung

Overvoltage protection device for an electrical circuit

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **20.05.2008  FR 0853252**

(43) Date de publication de la demande:
**25.11.2009  Bulletin 2009/48**

(73) Titulaire: **Schneider Electric Industries SAS
92500 Rueil-Malmaison (FR)**

(72) Inventeurs:
• **Carcouet, Sébastien
38450 Vif (FR)**

• **Leonard, Didier
38170 Seyssinet-Pariset (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**WO-A-2006/129005     JP-A- 2002 325 355
US-B1- 6 529 355**

## Description

La présente invention se rapporte à un dispositif de protection d'un système électronique contre les surtensions apparaissant sur le réseau d'alimentation.

Il est connu du document WO2006/129005 un dispositif de protection contre les surtensions générées par le réseau d'alimentation. Ce dispositif comporte notamment deux transistors à effet de champ (FET) connectés en série et aptes à limiter le courant lorsque celui-ci devient supérieur à leur courant de limitation. Cependant, lorsqu'une surtension est provoquée par la commutation de charges inductives ou capacitives présentes sur le réseau d'alimentation, une forte variation de tension peut apparaître à chaque manoeuvre. La tension de sortie du dispositif de l'art antérieur étant fixée par des moyens de limitation parallèle du type diode transil, tout le reste de la surtension est appliquée aux transistors JFETs. Le courant selfique généré lors de la surtension de manoeuvre peut alors être bien supérieur au courant de limitation des transistors JFETs. Dans ce cas, la tension aux bornes du système augmente fortement jusqu'à ce qu'un transistor entre en avalanche et ne limite donc plus le courant. L'énergie dissipée dans le transistor est alors considérable et peut entrainer la destruction des composants.

Le but de l'invention est de proposer un dispositif de protection d'un système électronique qui puisse être efficace contre les différents types de surtension apparaissant sur un réseau d'alimentation, qu'elles soient induites par des chocs de foudre ou par des manoeuvres de charges sur le réseau, et qui permette une dissipation d'énergie non destructive lors d'une surtension et très faible en fonctionnement nominal.

Ce but est atteint par un dispositif de protection selon la revendication 1. Le dispositif de l'invention est particulièrement adapté pour protéger tout système électronique raccordé au réseau de distribution électrique.

Le dispositif de l'invention est particulièrement adapté pour protéger efficacement un système d'alimentation électrique de type capacitif. En effet pour ce type particulier d'appareillage prélevant une très faible puissance sur le réseau électrique, l'invention permet à la fois de miniaturiser le dispositif de protection contre les surtensions, mais aussi d'améliorer considérablement le rendement énergétique et donc de réduire la dissipation thermique.

Selon une autre particularité, les deux transistors semi-conducteurs du dispositif sont fabriqués en carbure de silicium ou en nitrure de gallium.

Selon une autre particularité, le dispositif comporte une diode transil bidirectionnelle ou une varistance connectée en aval des deux transistors semi-conducteurs, en parallèle par rapport à la sortie.

L'invention concerne également un système électronique à protéger comportant une borne positive et une borne négative destinées à être connectées à un réseau d'alimentation électrique ce système comportant en entrée un dispositif de protection tel que défini ci-dessous connecté en série sur sa borne positive ou sa borne négative.

Selon une particularité, le système est constitué d'un système d'alimentation électrique comportant un module redresseur pour générer une tension continue sur un bus continu, un condensateur de bus monté entre une ligne positive et une ligne négative du bus continu.

Selon une autre particularité, le système d'alimentation électrique comporte un condensateur d'entrée connecté en série entre la borne positive ou négative, en aval du dispositif de protection.

D'autres caractéristiques et avantages vont apparaître dans la description détaillée qui suit en se référant à un mode de réalisation donné à titre d'exemple et représenté par les dessins annexés sur lesquels :

-   La figure 1 représente un dispositif de protection de l'invention adapté à tout système électronique raccordé au réseau de distribution électrique,

-   la figure 2 représente un dispositif de protection de l'invention adapté sur un système d'alimentation électrique de type capacitif.

Dans la suite de la description, Il faut comprendre que le dispositif de protection 2 est adapté pour protéger tout type de système électronique 3 connecté à un réseau d'alimentation électrique A alternatif et susceptible ainsi de subir différents types de perturbations provenant de ce réseau A. En exemple, le système électronique 3 à protéger peut être un système d'alimentation électrique 30 de type capacitif.

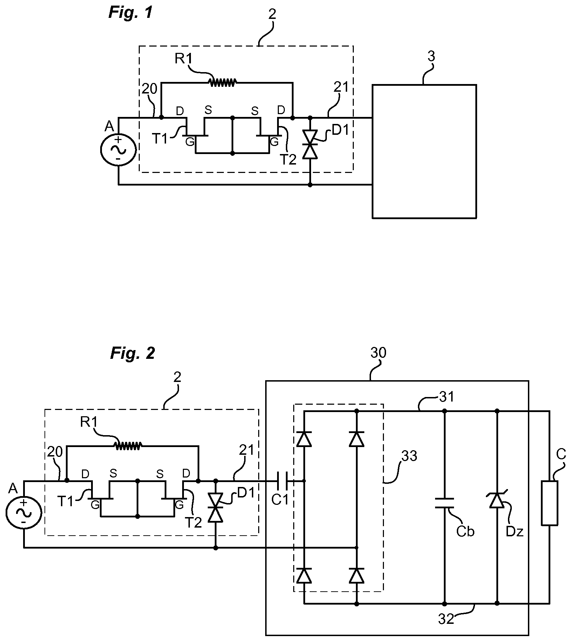

En référence à la figure 1, le dispositif de protection 2 de l'invention comporte une entrée 20 destinée à être connectée à une borne positive ou négative d'un réseau d'alimentation électrique A et une sortie 21 destinée à être connectée à un système électronique 3 à protéger. Entre l'entrée 20 et la sortie 21, le dispositif de protection 2 comporte deux transistors semi-conducteurs T1 et T2 à effet de champ, bidirectionnels et par exemple identiques. Les deux transistors semi-conducteurs T1, T2 sont montés en série et câblés en limiteur de courant. Ces deux transistors semi-conducteurs T1, T2 sont réalisés dans un matériau à grande énergie de bande interdite (appelé également "matériau à grand gap" ou "wide-band gap material"), comme par exemple le carbure de silicium ou le nitrure de gallium (GaN), ce qui leur confère une faible résistance à l'état passant $R_{DSon}$ et une capacité à supporter des tensions élevées (supérieures à 1000 V).

Ces transistors semi-conducteurs T1, T2 à effet de champ sont préférentiellement à jonctions, c'est-à-dire des transistors de type JFET ("Junction Field Effect Transistor"). Un transistor JFET est un composant semi-conducteur connu qui comporte une Grille de commande (G) dont la fonction est d'autoriser ou non le passage d'un courant entre un Drain (D) et une Source (S). Un tel transistor est dit de type normalement fermé (ou "Normally ON") si le chemin Drain-Source est passant ou conducteur en l'absence de tension de commande $V_{GS}$ entre Grille et Source. Inversement, un transistor JFET est dit du type normalement ouvert (ou "normally OFF") si le chemin Drain-Source n'est pas conducteur en l'absence de tension $V_{GS}$ entre Grille et Source. Dans l'invention, les transistors semi-conducteurs T1, T2 (désignés ci-après transistors) sont de type normalement fermé.

En référence à la figure 1, les transistors T1, T2 sont câblés en limiteur de courant et sont en série avec le système électronique 3 à protéger situé en aval. Ils sont montés tête-bêche, de telle sorte que le Drain (D) du transistor T1 soit relié au réseau d'alimentation A, le Drain (D) du transistor T2 soit relié système électronique 3 à protéger situé en aval, les Sources (S) des transistors T1, T2 soient reliées entre elles et les grilles (G) des deux transistors soient également reliées entre elles et chacune rebouclée sur le potentiel commun des sources (S).

Selon l'invention, pour protéger le système électronique 3 situé en aval contre les surtensions dues à des chocs de foudre sur le réseau d'alimentation, le dispositif de protection 2 de l'invention comporte un écrêteur de type varistance ou diode transil D1 bidirectionnelle montée en aval du transistor T2 en dérivation par rapport à la sortie 21. La combinaison des deux transistors T1, T2 et de l'écrêteur, constitué par la diode D1 sur la figure 1, permet de protéger le circuit électrique 3 situé en aval contre des surtensions fortement énergétiques sans pénaliser le volume du dispositif. La diode transil D1 a pour objectif de fixer la tension maximale en sortie du dispositif et de fournir un chemin préférentiel au courant qui circule lors d'une surtension. On peut imaginer supprimer cette diode transil D1 dans le cas où le condensateur de bus Cb a une valeur telle que l'augmentation de tension générée à ses bornes lors d'une surtension ne dépasse pas la tension maximum admissible par le système électronique 3 connecté en aval.

Le fonctionnement en limitation de courant opéré par les transistors JFETs réduit par principe considérablement le courant provoqué par la surtension, et donc réduit par conséquent l'énergie absorbée par le dispositif de protection comparé à un dispositif conventionnel. En fonction de la valeur de la surtension, l'énergie restant à dissiper se distribue entre la diode transil D1 et les deux transistors T1, T2 en série. Jusqu'à une valeur de surtension voisine de la tension d'écrêtage de la diode transil D1, l'essentiel de l'énergie est dissipé dans la transil. Pour les valeurs de surtensions plus élevées les transistors T1 et T2 prennent le relais pour dissiper l'énergie supplémentaire.

Le courant de limitation de chaque transistor T1, T2 est choisi de telle façon à pouvoir fournir le courant de démarrage nécessaire à la charge du système électronique 3. Pour optimiser la protection aux surtensions liées à la foudre, le courant de limitation est réduit au minimum requis pour le bon fonctionnement de la charge, ceci afin de réduire l'énergie à dissiper en cas de surtension, que ce soit dans chaque transistor T1, T2 ou dans la diode transil D1. Cependant, lorsque la surtension est provoquée par la commutation de charges inductives ou capacitives présentes sur le réseau d'alimentation A, une forte variation de tension apparaît à chaque manoeuvre. La tension de sortie du dispositif de l'invention étant fixée par la diode transil D1, tout le reste de la surtension est appliquée aux transistors T1, T2. Le courant selfique généré lors de la surtension de manoeuvre peut alors être bien supérieur au courant de limitation des transistors T1, T2. Dans ce cas, la tension aux bornes du dispositif 2 augmente fortement jusqu'à ce qu'un transistor T1, T2 entre en avalanche et ne limite donc plus le courant. L'énergie dissipée dans ce transistor est alors considérable et peut entrainer sa destruction des composants.

Pour résoudre le problème des surtensions de manoeuvre, il est possible de dimensionner les transistors T1, T2 de manière appropriée pour que ceux-ci puissent supporter l'énergie maximale. Cependant, cette solution est particulièrement coûteuse. En variante, il est possible de placer une résistance R1 correctement dimensionnée en parallèle des deux transistors JFETs afin de pouvoir y dissiper toute l'énergie générée par les surtensions de manoeuvre. Dans cette variante, chaque transistor T1, T2 peut donc rester de dimensions modestes et à un coût raisonnable. La résistance R1 montée en parallèle devra donc être dimensionnée de manière à limiter la tension au-dessous de la tension maximale supportée par les transistors T1, T2.

Il est à noter que la caractéristique de limitation en courant des transistors JFETs dépend de la température. Pendant la montée en tension de la surtension, on observe d'abord une dissipation dans la diode transil D1 puis dans les transistors T1, T2 entraînant un échauffement progressif des transistors et donc un abaissement du niveau de limitation du courant. En présence d'une surtension due à la foudre, cet effet d'échauffement est favorable en ce sens qu'il permet de limiter l'énergie à dissiper, puisque le courant dans les JFETs et dans la diode transil est lui-même limité. En revanche, en présence d'une surtension de manoeuvre et d'un courant selfique, le courant ne peut plus s'écouler à travers les JFETs, ce qui entraîne une montée rapide de la tension jusqu'à la valeur seuil d'avalanche des JFETs à partir de laquelle le courant peut traverser les transistors JFETs sans limitation. Selon l'invention, la résistance R1 câblée en parallèle par rapport aux JFETs constitue alors un chemin emprunté par le courant selfique dès l'instant que l'équation ci-dessous est vérifiée :

$$U_{max} = (I_{max} - I_{limJFET}) \times R1$$

Ainsi selon la valeur maximale de Imax (courant selfique) il est possible de définir une résistance R1 telle que Umax soit inférieur à UJFETbr, de manière à éviter l'entrée en avalanche des JFETs. La sensibilité en température des JFETs permet alors de favoriser le transfert de la dissipation d'énergie vers la résistance R1, ce qui améliore la robustesse du dispositif.

Exemple de dimensionnement :

Charge inductive sur le réseau de 300VA avec Imax=1,8 A

Courant de limitation d'un transistor JFET : IlimJFET=0,1 A

Tenue en tension maximale d'un transistor JFET : UJFETbr=2000V

On obtient R1=UJFETbr/(Imax-IlimJFET)=1176 Ohms

En référence à la figure 2, le système électronique 3 à protéger est par exemple un système d'alimentation électrique 30 destiné à alimenter une charge électrique C. Un tel système d'alimentation 30 comporte deux bornes d'entrée, une borne positive et une borne négative, destinées à être connectées à un réseau d'alimentation A appliquant une tension alternative, par exemple égale à 230 Vac ou 400 Vac, générée à une fréquence qui est par exemple de 50Hz. Le système comporte en outre en entrée un module redresseur 33 constitué par exemple d'un pont de diodes permettant de générer sur un bus continu une tension continue à partir de la tension alternative du réseau d'alimentation A, un condensateur de bus Cb monté entre une ligne positive 31 et une ligne négative 32 du bus, en aval du module redresseur 33, et un condensateur d'entrée C1 connecté d'une part à la borne positive et d'autre part à une branche du pont de diodes. Le système 30 peut également comporter des moyens pour limiter la tension fournie par le système d'alimentation, constitués par exemple d'une diode Zener Dz connectée entre la ligne positive 31 et la ligne négative 32 du bus, en aval du condensateur de bus Cb.

Sur la figure 1, le dispositif de protection 2 de l'invention est ainsi monté en amont du système d'alimentation électrique de type capacitif décrit ci-dessus. Le dispositif 2 apporte une protection contre les différents types de surtension que peut subir le système d'alimentation, notamment les surtensions dues à la foudre ou dues à des manoeuvres de charges présentes sur le réseau d'alimentation A. Ce dispositif présente aussi l'avantage de protéger le système d'alimentation 30 des surintensités apparaissant à la mise sous tension, en limitant le courant de démarrage. En effet, au démarrage du système d'alimentation, la forte variation de tension vue par le condensateur d'entrée C1 entraîne un fort appel de courant à travers les deux transistors T1, T2. Lorsque l'intensité du courant augmente et devient supérieure à l'intensité du courant de limitation du transistor T1, le transistor T1 passe en limitation entraînant une augmentation de sa résistance interne. Comme sa résistance augmente, la tension aux bornes du transistor augmente. Il en est de même pour le transistor T2. Ainsi la forte variation de tension se produisant au démarrage est absorbée par les transistors. En fonctionnement normal, les résistances à l'état passant des deux transistors T1, T2 sont très faibles ce qui ne génère que de faibles pertes par dissipation.

**Revendications**

1. Dispositif de protection (2) contre des surtensions comportant une entrée (20) destinée à être connectée à un réseau d'alimentation électrique (A), une sortie (21) destinée à être connectée à un système électronique (3) à protéger, le dispositif comprenant :

   - deux transistors semi-conducteurs (T1, T2) à effet de champ bidirectionnels de type normalement fermé, montés en série entre l'entrée (20) et la sortie (21), fabriqués dans un matériau à grande énergie de bande interdite et pouvant fonctionner en limitation de courant,
   - les transistors semi-conducteurs (T1, T2) étant montés tête-bêche, de telle sorte que le Drain (D) d'un premier transistor semi-conducteur (T1) soit relié au réseau d'alimentation (A), le Drain (D) d'un deuxième transistor semi-conducteur (T2) soit relié au système électronique (3) à protéger situé en aval, les Sources (S) des transistors semi-conducteurs (T1, T2) soient reliées entre elles et les grilles (G) des deux transistors semi-conducteurs (T1, T2) soient également reliées entre elles et chacune rebouclée sur le potentiel commun des sources (S), **caractérisé en ce que** les transistors sont du type JFET, et par
   - une résistance (R1) montée en parallèle des deux transistors (T1, T2), ladite résistance (R1) étant dimensionnée de manière à limiter la tension au-dessous de la tension maximale supportée par les deux transistors (T1, T2).

2. Dispositif selon la revendication 1, **caractérisé en ce que** les deux transistors semi-conducteurs (T1, T2) sont fabriqués en carbure de silicium ou en nitrure de gallium.

3. Dispositif selon la revendication 1 ou 2, **caractérisé en ce qu'**il comporte une diode transil (D1) bidirectionnelle ou une varistance connectée en aval des deux transistors semi-conducteurs (T1, T2), en parallèle par rapport à la sortie (21).

4. Système électronique (3) à protéger comportant une borne positive et une borne négative destinées à être connectées à un réseau d'alimentation électrique (A), **caractérisé en ce qu'**il comporte en entrée un dispositif de protection (2) tel que défini dans l'une des revendications 1 à 3, ledit dispositif étant connecté en série sur sa borne positive ou sa borne négative.

5. Système selon la revendication 4, **caractérisé en ce qu'**il est constitué d'un système d'alimentation électrique comportant un module redresseur (33) pour générer une tension continue sur un bus continu, un condensateur de bus (Cb) monté entre une ligne positive (31) et une ligne négative (32) du bus continu.

6. Système selon la revendication 4 ou 5, **caractérisé en ce que** le système d'alimentation électrique comporte un condensateur d'entrée (C1) connecté en série entre la borne positive ou négative, en aval du dispositif de protection (2).


**Patentansprüche**

1. Vorrichtung zum Schutz (2) vor Überspannungen, welche einen Eingang (20), der dazu bestimmt ist, mit einem elektrischen Stromversorgungsnetz (A) verbunden zu werden, und einen Ausgang (21), der dazu bestimmt ist, mit einem zu schützenden elektronischen System (3) verbunden zu werden, aufweist, wobei die Vorrichtung aufweist:

- zwei bidirektionale Halbleiter-Feldeffekttransistoren (T1, T2) vom normal geschlossenen Typ, die zwischen dem Eingang (20) und dem Ausgang (21) in Reihe geschaltet sind, aus einem Material mit großer Bandlückenenergie hergestellt sind und im Strombegrenzungsmodus betrieben werden können,
- wobei die Halbleitertransistoren (T1, T2) antiparallel geschaltet sind, derart, dass der Drain (D) eines ersten Halbleitertransistors (T1) mit dem Stromversorgungsnetz (A) verbunden ist, der Drain (D) eines zweiten Halbleitertransistors (T2) mit dem zu schützenden elektronischen System (3) verbunden ist, welches nachgeschaltet ist, die Sources (S) der Halbleitertransistoren (T1, T2) miteinander verbunden sind und die Gates (G) der zwei Halbleitertransistoren (T1, T2) ebenfalls miteinander verbunden sind und jeweils auf das gemeinsame Potential der Sources (S) rückgekoppelt sind,

**dadurch gekennzeichnet, dass** die Transistoren vom Typ JFET sind, und durch

- einen Widerstand (R1), der zu den zwei Transistoren (T1, T2) parallelgeschaltet ist, wobei der Widerstand (R1) derart bemessen ist, dass er die Spannung unterhalb der maximalen Spannung begrenzt, der die zwei Transistoren (T1, T2) standhalten.

2. Vorrichtung nach Anspruch 1, **dadurch gekennzeichnet, dass** die zwei Halbleitertransistoren (T1, T2) aus Siliciumcarbid oder aus Galliumnitrid hergestellt sind.

3. Vorrichtung nach Anspruch 1 oder 2, **dadurch gekennzeichnet, dass** sie eine bidirektionale Transildiode (D1) oder einen Varistor aufweist, die bzw. der den zwei Halbleitertransistoren (T1, T2) nachgeschaltet ist, parallel zum Ausgang (21).

4. Zu schützendes elektronisches System (3), welches eine positive Anschlussklemme und eine negative Anschlussklemme aufweist, die dazu bestimmt sind, mit einem elektrischen Stromversorgungsnetz (A) verbunden zu werden, **dadurch gekennzeichnet, dass** es am Eingang eine Schutzvorrichtung (2) aufweist, wie in einem der Ansprüche 1 bis 3 definiert, wobei diese Vorrichtung an seiner positiven Anschlussklemme oder seiner negativen Anschlussklemme in Reihe geschaltet ist.

5. System nach Anspruch 4, **dadurch gekennzeichnet, dass** es aus einem Stromversorgungssystem besteht, welches ein Gleichrichtermodul (33) zum Erzeugen einer Gleichspannung auf einem Gleichstrombus aufweist, wobei ein Buskondensator (Cb) zwischen einer positiven Leitung (31) und einer negativen Leitung (32) des Gleichstrombusses angebracht ist.

6. System nach Anspruch 4 oder 5, **dadurch gekennzeichnet, dass** das Stromversorgungssystem einen Eingangskondensator (C1) aufweist, der zwischen der positiven und der negativen Anschlussklemme, der Schutzvorrichtung (2) nachgeschaltet, in Reihe geschaltet ist.


**Claims**

1. Overvoltage protection device (2), comprising an input (20) intended to be connected to a power supply mains (A), and an output (21) intended to be connected to an electronic system (3) to be protected, the device comprising:

- two bidirectional field-effect semiconductor transistors (T1, T2) of normally-on type, connected in series between the input (20) and the output (21), these being fabricated in a wide-bandgap material and able to operate in current-limiting mode,
- the semiconductor transistors (T1, T2) being connected back to back, in such a way that the drain (D) of a first semiconductor transistor (T1) is connected to the supply mains (A), the drain (D) of a second semiconductor transistor (T2) is connected to the electronic system (3) to be protected, located downstream, the sources (S) of the semiconductor transistors (T1, T2) are connected together, and the gates (G) of the two semiconductor transistors (T1, T2) are also connected together and each is looped back onto the common potential of the sources (S), **characterized in that** the transistors are of the JFET type, and in

- a resistor (R1) connected in parallel with the two transistors (T1, T2), said resistor (R1) being sized so as to limit the voltage to below the maximum voltage withstood by the transistors (T1, T2).

2. Device according to Claim 1, **characterized in that** the two semiconductor transistors (T1, T2) are fabricated in silicon carbide or in gallium nitride.

3. Device according to Claim 1 or 2, **characterized in that** it includes a bidirectional transil diode (D1) or a varistor connected downstream of the two semiconductor transistors (T1, T2) in parallel with the output (21).

4. Electronic system (3) to be protected, which has a positive terminal and a negative terminal that are intended to be connected to a power supply mains (A), **characterized in that** it includes as input a protection device (2) as defined in one of Claims 1 to 3, said device being connected in series to its positive terminal or its negative terminal.

5. System according to Claim 4, **characterized in that** it consists of a power supply system that includes a rectifier module (33), for generating a DC voltage on a DC bus, and a bus capacitor (Cb) connected between a positive line (31) and a negative line (32) of the DC bus.

6. System according to Claim 4 or 5, **characterized in that** the power supply system includes an input capacitor (C1) connected in series between the positive or negative terminal, downstream of the protection device (2).

*Fig. 1*

*Fig. 2*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006129005 A